# EUROPEAN PATENT SPECIFICATION

(11) **EP 0 572 374 B1**
(45) Date of publication and mention of the grant of the patent: **05.03.1997**
(21) Application number: 90909819.6
(22) Date of filing: 11.05.1990
(51) Int. Cl.: A01D 87/12, A01F 29/00

(54) **APPARATUS FOR LIFTING, TRANSPORTING AND CUTTING BALES**
VORRICHTUNG UM BALLEN ZU HEBEN, ZU TRANSPORTIEREN UND ZU ZERSCHNEIDEN
APPAREIL DE SOULEVEMENT, DE TRANSPORT ET DE DECOUPAGE DE BOTTES

(43) Date of publication of application: 08.12.1993
(73) Proprietor: AB ALÖ-MASKINER, S-905 90 Umea (SE)
(72) Inventor: LINDBERG, Arne, S-905 90 Ume (SE)
(74) Representative: Onn, Thorsten
(86) International application number: SE9000316
(87) International publication number: WO9117650

(56) References cited:
- WO-A-88/10064
- US-A- 4 099 629
- US-A- 4 771 670

## Description

This invention relates to a knife means for lifting, transportation and dividing into pieces of bales within agriculture, preferably ensilage bales. A device which comprises the features of the preamble of claim 1 is known from US-A-4771670.

In later times when storaging hay it has become popular among farmers to roll up the hay strings to a large bundle for making bales and then put the hay bundle into an airtight plastic sack. This plastic sack is allowed to remain lying on the ground until feeding of the animals shall be done. This handling is today mechanized to a great extent. The problem, however, is the dividing into pieces of the large ensilage bale during the feeding. This is today made by trying to unroll the bale or tear/cut it up into suitable pieces. Of course, this is a time-consuming and work-requiring procedure.

This invention relates to facilitate the dividing into pieces of ensilage bales at first hand. This has been made possible by a knife means having the features mentioned in the following claims. Due to the design of the knife means and due to the fact that the knife means is intended to be mounted onto the hydraulic lifting device of a vehicle, the knife means can be effectively cut through the ensilage bale, which gives a very rapid and effective dividing into pieces of the bale.

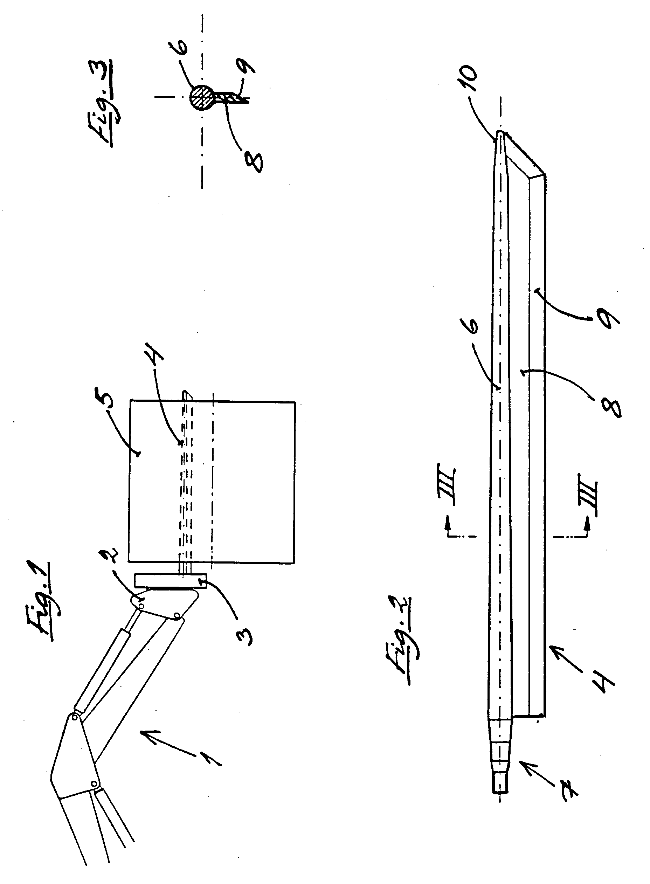

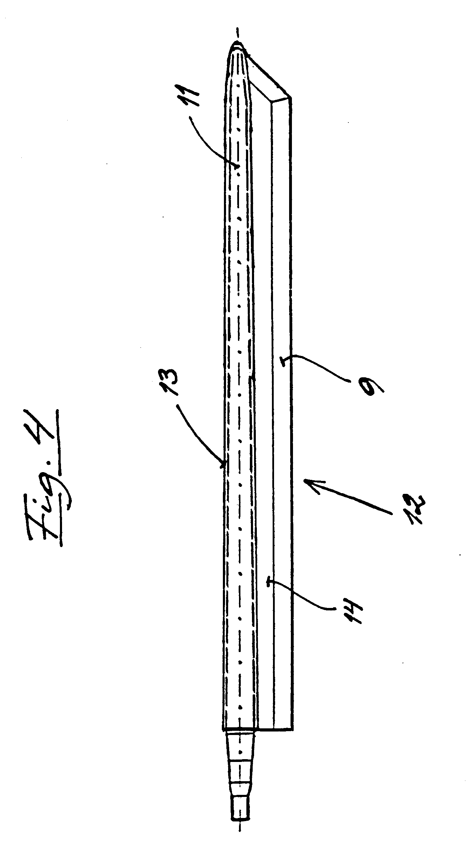

A preferred embodiment of the invention shall be described more closely below with reference to the accompanying drawings, where Fig. 1 shows a schematical view of an apparatus for dividing the object into pieces, i.e. a hydraulic lifting device and a knife means cooperating with the lifting device in engagement with an ensilage bale, Fig. 2 shows a side view of the knife means, Fig. 3 shows a section through the line III-III of Fig. 2, and Fig. 4 shows a second embodiment of the knife means.

Referring to Fig. 1 is shown there a schematical sketch over the apparatus for dividing the object into pieces. This one comprises a hydraulic lifting device 1 which is fastened on a vehicle, not shown, which is suitably a tractor. On the fore portion 2 of the lifting device is detachably fastened an attachment device 3. This one is intended to carry a knife means 4 which is suitably detachably fastened in the attachment device by means of a bolt joint. Due to that fact the knife means can be easily exchanged if it is damaged. The knife means 4 has an elongated form and projects essentially perpendicularly from the attachment device. Due to that fact the knife means by means of the hydraulic lifting device of the vehicle can be put on the top side of an ensilage bale 5 and then be pressed in the direction downwards, the knife cutting itself through the bale in an effective way. The knive means can of course be swung in the vertical plane by means of the lifting device, which can be of value during certain phases of the procedure of the dividing into pieces.

Another way of dividing an ensilage bale into pieces is to turn the knife means in that way that the cutting edge of the knife blade is directed upwards and then insert the knife means into the bale for instance at the centre of the same. In that connection the bale will be divided into pieces by means of its own weight when the knife means is moved upwards.

In Figs. 2 and 3 is shown a preferred embodiment of the knife means more closely. According to this embodiment the knife means 4 comprises a spear-like stick 6 of the kind that is today used when lifting and handling bales in another way. This stick 6 that is preferably made of massive steel, has a rear portion 7 that it intended to be detachably fastened to the attachement device 3 by means of a bolt joint. This device 3 comprises a frame that is directed essentially vertically when the knife means has taken an essentially horizontal position. The stick 6, according to this embodiment, has an essentially circular cross-section as is shown i Fig. 3 but of course may have another cross-section, for instance square.

On the underside of the stick 6, preferably by means of a weld joint, is fastened a knife blade 8 which at the bottom has a cutting edge 9 in order to achieve a better cutting ability, which appears from Fig. 3. The cutting edge 9 of the knife blade 8 extends right up to the fore end 10 of the stick 6, which end 10 is pointedly designed. Due to that fact the stick 6 with the knife blade 8 can easily penetrate into an ensilage bale. An important part of the invention is that the knife means 4 has a broad, carrying surface at the top, whereby the knife means after having been inserted into the ensilage bale can be used for lifting and/or removal of the same.

In connection with these activities torsional forces may arize on the knife means, having the consequence that this one can get loose from the attachment device. In order to prevent torsion of the knife means 4 in relation to the attachment device 3 heals or the like can be fastened on the attachment device, which has such a extension in the longitudinal direction of the knife means that they come on each side of the knife means 8.

According to another embodiment of the knife means, which is shown in Fig. 4 a spear-like stick 11 is intended to be fastened to the attachment device 3. The knife means 12 itself is fastened to this stick in that way that it cannot be turned in relation to the stick. The knife means 12 in this case comprises a tubular stick 13, which is closed and pointedly designed at the front and which is intended to be pushed on the outside of the stick 11 fastened to the attachment device, and a knife blade 14 fastened to the underside of the tubular stick 13.

The knife means according to Fig. 4 in similarity with the the knife means according the Figs. 2, 3 has a broad, carrying surface at the top so that the knife means also can be used for lifting and transportation of bales.

A third embodiment of the knife means may comprise a stick and a knife blade which are made in one piece.

The invention herein described is intended to lift, to transport and to divide into pieces ensilage bales in the form of hay strings rolled up, the bale at first hand being divided into two equal parts. Of course, the invention may also be used for dividing the ensilage blocks into pieces which are cut out from plane silos with the technique existing today.

In the description has been talked about ensilage bales. Of course, the novel invention is also useable when lifting, transportation and dividing into pieces of other bales, for instance straw and hay bales.

The invention is of course not limited to what has been mentioned above but further modifications of the invention can be made within the scope of the following claims.

## Claims

1. A knife means for lifting, transportation and dividing into pieces of bales within agriculture, preferably ensilage bales, wherein the knife means (4;12) is intended to be fastened to a hydraulic lifting device (1) on a vehicle, for instance a tractor, and wherein the knife means (4;12) has an elongated form and is intended to cooperate with the hydraulic lifting device (1) in that way that the knife means (4;12) can be brought to move essentially in the vertical plane with an essentially horizontal extension,
wherein the knife means (4;12) has such a design with a cutting edge (9) in its lower portion, so that the knife means can effectively cut itself through the entire ensilage bale from its top portion to its bottom portion when making the essentially vertical motion, **characterized** by the combination of the following features:
- the knife means (4;12) has a broad, carrying surface at the top, which surface is considerably broader than the thickness of the knife blade (8), so that after insertion into the ensilage bale it can effectively lift and/or move the same.

2. A knife means according to claim 1, this one being fastened to an attachment device (3) which in its turn is intended to be fastened to the hydraulic lifting device of the vehicle, **characterized** in that the attachment device (3) comprises a frame cooperating with the knife means (4) in that way that when this one has an essentially horizontal extension, the frame (3) takes an essentially vertical position, and that the knife means (4) comprises a portion (6), functioning as a support, and a knife blade (8) which is fastened to the underside of the portion (6).

3. A knife means according to claim 2, **characterized** in that the portion (6) and the knife blade (8) are made in one piece.

4. A knife means according to claim 2, **characterized** in that the portion (6) functioning as a support comprises a spear-like stick, the rear portion (7) of which comprises attachment means which make possible a detachable attachment of the stick (6) to the attachment device (3).

5. A knife means acccording to claim 1, this one being intended to cooperate with a spear-like stick (11), which is intended to be fastened to an attachment device (3) which in its turn is intended to be fastened to the lifting device (1) of the vehicle, **characterized** in that the knife means (12) comprises a tubular stick (13) which is closed and pointedly designed at the front and intended to be pushed on the outside of the stick (11) fastened to the attachment device (3), and that the tubular stick (13) has a knife blade (14) on its underside.

6. A knife means according to claim 3 or 5 , **characterized** in that the knife blade (8;14) is provided with a cutting edge (9) at the bottom which extends up to the front portion of respective stick (6;13).

## Patentansprüche

1. Messeranordnung zum Heben, Transportieren und Zerschneiden von Ballen in Stücke in der Landwirtschaft, vorzugsweise Silageballen, wobei die Messeranordnung (4; 12) zum Befestigen an einer hydraulischen Hebevorrichtung (1) an einem Fahrzeug bestimmt ist, beispielsweise einem Traktor, und wobei die Messeranordnung (4; 12) eine längliche Form besitzt und dazu bestimmt ist, derart mit der hydraulischen Hebevorrichtung zusammenzuarbeiten, dass die Messervorrichtung (4; 12) im wesentlichen in der vertikalen Ebene mit einer im wesentlichen horizontalen Ausdehnung bewegbar ist, wobei die Messeranordnung (4; 12) derart ausgelegt ist, dass sie, mit einer Schneidkante (9) in ihrer unteren Stellung, sich selbst im Verlaufe der genannten im wesentlichen vertikalen Bewegung durch den gesamten Silageballen von oben nach unten hindurcharbeiten kann, gekennzeichnet durch die Kombination der folgenden Merkmale:
- die Messeranordnung (4; 12) besitzt im oberen Bereich eine breite, tragende Fläche, welche beträchtlich breiter ist als die Messerklinge (8), so dass, nach Einführen in den Silageballen, sie diesen wirksam heben und/oder bewegen kann.

2. Messeranordnung nach Anspruch 1, welche an einer Verbindungsvorrichtung (3) befestigt ist, welche wiederum dazu bestimmt ist, an der hydraulischen Hebevorrichtung des Fahrzeugs angebracht zu werden, dadurch gekennzeichnet, dass die Verbindungsvorrichtung (3) einen mit der Messeranordnung (4) zusammenwirkenden Rahmen aufweist, derart, dass der Rahmen eine im wesentlichen vertikale Stellung einnimmt, wenn die Messeranordnung im wesentlichen horizontal steht, und dass die Messeranordnung (4) einen Bereich (6) besitzt, der als Träger dient, sowie eine Messerklinge (8), die unten am genannten Bereich (6) angebracht ist.

3. Messeranordnung nach Anspruch 2, dadurch gekennzeichnet, dass der Bereich (6) und die Messerklinge (8) aus einem Stück bestehen.

4. Messeranordnung nach Anspruch 2, dadurch gekennzeichnet, dass der als Träger dienende Bereich (6) einen speerartigen Stab aufweist, an dessen rückwärtigem Teil (7) sich Verbindungsmittel befinden, welche eine abnehmbare Verbindung des Stabes (6) mit der Verbindungsvorrichtung (3) ermöglichen.

5. Messeranordnung nach Anspruch 1, welche dazu bestimmt ist, mit einem speerartigen Stab (11) zusammenzuwirken, der an einer Verbindungsvorrichtung (3) befestigbar ist, die wiederum dazu bestimmt ist, an der Hebevorrichtung (1) des Fahrzeugs angebracht zu werden, dadurch gekennzeichnet, dass die Messeranordnung (12) einen rohrförmigen Stab (13) aufweist, der vorn geschlossen und zugespitzt ist und dazu bestimmt ist, über den Stab (11), der an der Verbindungsvorrichtung (3) befestigt ist, geschoben zu werden, und dass der rohrförmige Stab (13) an seiner Unterseite eine Messerklinge (14) trägt.

6. Messeranordnung nach Anspruch 3 oder 5, dadurch gekennzeichnet, dass die Messerklinge (8; 14) an der Unterseite eine Schneidkante (9) aufweist, die sich nach oben bis zum Vorderteil des jeweiligen Stabs (6; 13) erstreckt.

## Revendications

1. Dispositif de couteau pour lever, transporter et couper en pièces les ballots dans l'agriculture, en particulier les ballots d'ensilage, où ce dispositif de couteau (4; 12) est destiné à être fixé à un dispositif de levage hydraulique (1) d'un véhicule, par exemple un tracteur, et où le dispositif de couteau (4; 12) présente une forme allongée et est destiné à coopérer avec le dispositif de levage hydraulique (1) de sorte que le dispositif de couteau (4; 12) peut être amené à se déplacer essentiellement dans le plan vertical en prenant une extension horizontale, le dispositif de couteau (4; 12) ayant une telle configuration avec l'arête coupante (9) dans sa position inférieure que le dispositif de couteau peut effectivement traverser elle-même le ballot d'ensilage entier de haut en bas en effectuant le mouvement de coupe essentiellement vertical, caractérisé par la combinaison des particularités suivantes:
- le dispositif de couteau (4; 12) présente en haut une surface de support large laquelle est considérablement plus large que l'épaisseur de la lame de couteau (8) de sorte que, après l'insertion dans le ballot d'ensilage, il peut effectivement soulever et/ou déplacer ce dernier.

2. Dispositif de couteau selon la revendication 1, qui est fixé à un dispositif d'attache (3) qui, de sa part, est destiné à être fixé au dispositif de levage hydraulique du véhicule, caractérisé en ce que le dispositif d'attache (3) comporte un cadre coopérant avec le dispositif de couteau (4) de telle sorte que, lorsque ce dernier est dirigé horizontalement, le cadre prend une position essentiellement verticale, et que le dispositif de couteau (4) comprend une partie (6) servant de support et une lame de couteau (8) fixée au côté inférieur de la partie (6).

3. Dispositif de couteau selon la revendication 2, caractérisé en ce que la partie (6) et la lame de couteau (8) sont en une seule pièce.

4. Dispositif de couteau selon la revendication 2, caractérisé en ce que la partie (6) servant de support comprend une tige en forme de lance dont la partie postérieure (7) comporte des moyens d'attache permettant une connexion amovible de la tige (6) au dispositif d'attache (3).

5. Dispositif de couteau selon la revendication 1, qui est destiné à coopérer avec une tige en forme de lance (11) destinée à être fixée à un dispositif d'attache (3) qui est destiné de sa part à être fixé au dispositif de levage (1) du véhicule, caractérisé en ce que le dispositif de couteau (12) comprend une tige tubulaire (13) fermée et effilée sur le devant et destinée à être poussée au-dessus de la tige (11) fixée au dispositif d'attache (3), et que la tige tubulaire (13) comporte une lame de couteau (14) sur son côté inférieur.

6. Dispositif de couteau selon la revendication 3 ou 5, caractérisé en ce que la lame de couteau (8; 14) est pourvue en bas d'une arête coupante (9) s'étendant vers le haut jusqu'à la partie avant de la tige respective (6; 13).
